# EUROPÄISCHE PATENTANMELDUNG

(11) **EP 2 161 151 A1**
(43) Veröffentlichungstag der Anmeldung: **10.03.2010**
(21) Anmeldenummer: 08015500.5
(22) Anmeldetag: 03.09.2008
(51) Int. Cl.: B60J 7/04

(54) **Schiebeverdeck**

(71) Anmelder: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kampf-Lintfort (DE); Neumeyer, Frank, 47877 Willich (DE); Frentzen, Frank, 41749 Viersen (DE); Birkenbach, Rolf, 47809 Krefeld (DE); Kremmerling, Karl, 42719 Solingen (DE); Sholz, Axel, 47477 Moers (DE); Lauterbach, Tim, 41066 Mönchengladbach (DE); Weigelt, Rolf, 47228 Duisburg (DE)
(74) Vertreter: DR. STARK & PARTNER

(57) **Zusammenfassung**

Die Erfindung betrifft ein Schiebeverdeck (1) für LKW oder LKW-Anhänger, mit Oberhalb der Ladefläche des LKW oder LKW-Anhängers entlang der Längsseiten der Ladefläche verlaufenden Lauf- und Führungsschienen (2), in denen ein zusammenfaltbares Verdeck (3) verschieblich geführt ist.
Um ein Schiebeverdeck für LKW oder LKW-Anhänger anzugeben, das ein einfaches Öffnen und Schließen für eine zeitweise Zugänglichkeit der Ladefläche und gleichzeitig eine verbesserte Nutzung ermöglicht, soll das Verdeck, insbesondere gelenkig miteinander verbundene, plattenförmige Teilelemente (4) umfassen.

## Beschreibung

Die Erfindung betrifft ein Schiebeverdeck für LKW oder LKW-Anhänger, mit Oberhalb der Ladefläche des LKW oder LKW-Anhängers entlang der Längsseiten der Ladefläche verlaufenden Lauf- und Führungsschienen, in denen ein zusammenfaltbares Verdeck verschieblich geführt ist.

Aus der Praxis sind Schiebeverdecke in unterschiedlichsten Ausführungen bekannt. Dabei wird in der Regel eine die Ladefläche überdeckende Plane für Ladevorgänge zusammen geschoben, um somit eine bessere Zugänglichkeit der Ladefläche zu ermöglichen. Die Plane umfasst dabei sowohl den oberseitigen Bereich als auch die seitlichen Bereiche.

Nachteilig hierbei ist, dass eine nicht straff gespannte Plane im Fahrbetrieb flattert und es somit zu Beeinträchtigungen kommen kann. Darüber hinaus ist eine Plane gerade auch in den Faltstellen erhöhter Belastung ausgesetzt, so dass es dort zu einem verstärkten Verschleiß kommen kann.

Aufgabe der Erfindung ist es, die vorgenannten Nachteile zu vermeiden und Schiebeverdeck für LKW oder LKW-Anhänger anzugeben, das ein einfaches Öffnen und Schließen für eine zeitweise Zugänglichkeit der Ladefläche ermöglicht und gleichzeitig eine verbesserte Nutzung ermöglicht.

Diese Aufgabe wird dadurch gelöst, dass das Verdeck, insbesondere gelenkig miteinander verbundene, plattenförmige Teilelemente umfasst. Hierdurch ist das Schiebeverdeck im Fahrbetrieb als eine einheitliche Abdeckung ausgebildet und lose Teilbereiche werden erfolgreich vermieden.

Dabei können die plattenförmigen Dachelemente zumindest zur Seite hin abfallend ausgebildet sein, so dass ein gutes Selbstreinigungsverhalten durch seitlich ablaufendes Wasser und ggf. zur Seite rutschende Festkörper gegeben ist.

Auch können die plattenförmigen Dachelemente zumindest zueinander weisend abfallend ausgebildet sein, so dass das Selbstreinigungsverhalten durch (zunächst) zum Verbindungsbereich zweier aneinander angrenzender Dachelemente, und vorzugsweise dort dann seitlich ablaufendes Wasser und ggf. zur Seite rutschende Festkörper, nochmals verbessert ist, da hierdurch nur an definierten Stellen ein "Abfließen" von Verunreinigungen erfolgt.

Vorteilhafterweise kann der Aufbau der plattenförmigen Dachelemente einen Verbundstoff, wie z. B. wabenstrukturiertem beschichteten Papier oder schaumgefüllten Profilelementen, umfassen, es kann alternativ aber auch eine mit einem Netz, einer Folie oder einer dünnen Platte bespannte oder belegte Rahmenstruktur vorgesehen sein.

Erfindungsgemäß kann für die Betätigung des Verdecks ein manuelles Betätigungselement, wie z. B. eine Schlaufe, ein Seilzug oder eine Kurbel, vorgesehen sein, so dass mittels einer einfachen technischen Konstruktion ein handbetätigtes Öffnen und Schließen des Schiebeverdecks möglich ist.

Auch kann eine elektrische, insbesondere elektromotorische, eine pneumatische oder hydraulische, oder aber eine motorische Betätigung des Verdecks vorgesehen sein, so dass ein Öffnen und Schließen des Schiebeverdecks ohne manuellen Kraftaufwand erfolgen kann.

Vorzugsweise kann das Verdeck begehbar mit ausreichender Stabilität ausgebildet sein, was bei Lade- und Kontrollvorgängen sowie bei evtl. Reinigungstätigkeiten in Bezug auf das Schiebeverdeck vorteilhaft ist.

Erfindungsgemäß kann das Verdeck im geschlossenen Zustand wasserdicht ausgebildet sein, so dass ohne weitere Maßnahmen eine negative Beeinflussung von auf der Ladefläche befindlicher Ladung durch oberseitig eintretende Nässe vermieden wird.

Bei einem bevorzugten Ausführungsbeispiel der Erfindung kann das Verdeck im geschlossenen Zustand thermisch isolierend ausgebildet sein, so dass bei entsprechender Ausgestaltung der Seitenwände einschließlich eventuell vorgesehener Türen oder einer Ladeklappe am Heck eine gute thermische Isolierung einen Einsatz als Kühlfahrzeug oder Kühlanhänger ermöglicht.

Vorzugsweise kann zumindest bei zwei plattenförmige Teilelementen die Führung des Verdecks in den Lauf- und Führungsschienen in dem Bereich, in dem die plattenförmige Teilelemente gelenkig miteinander verbunden sind, vorgesehen sein, so dass die plattenförmigen Teilelemente beim Öffnen des Schiebeverdecks ausschließlich nach oben verschwenken und somit nicht in den Laderaum hineinragen, der deswegen vollständig für die Ladung zur Verfügung stehet.

Im Folgenden werden in der Zeichnung dargestellte Ausführungsbeispiele der Erfindung erläutert. Es zeigen:
- Fig. 1 bis 4: ein erstes Ausführungsbeispiel eines erfindungsgemäßen Schiebeverdecks, und
- Fig. 5 bis 8: ein zweites Ausführungsbeispiel eines erfindungsgemäßen Schiebeverdecks, und

In allen Figuren werden für gleiche bzw. gleichartige Bauteile übereinstimmende Bezugszeichen verwendet.

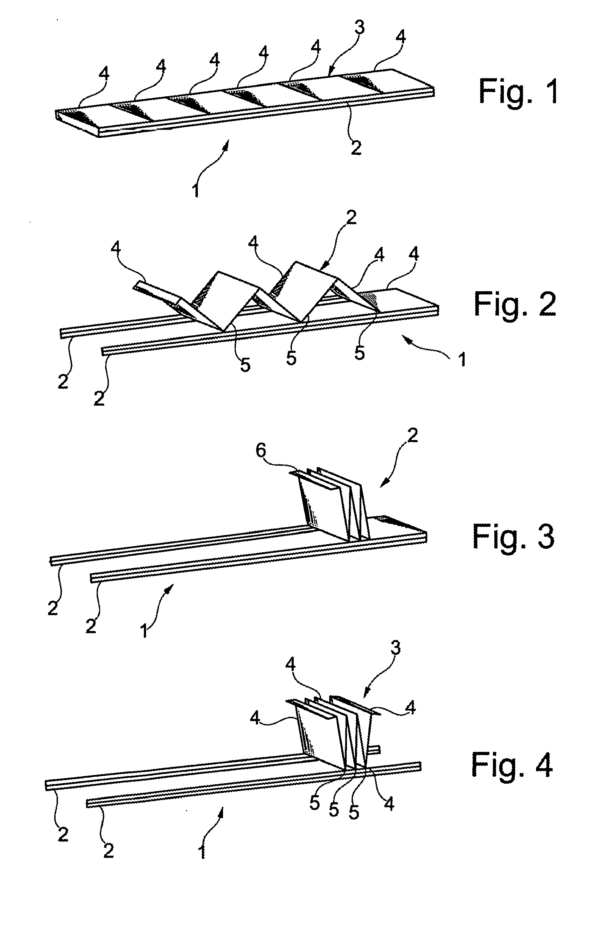

In den Figuren 1 bis 4 ist ein Schiebeverdeck 1 für einen in der Zeichnung nicht dargestellten LKW oder LKW-Anhänger gezeigt, bei dem oberhalb der Ladefläche des LKW oder LKW-Anhängers entlang der Längsseiten der Ladefläche verlaufende Lauf- und Führungsschienen 2 vorgesehen sind, in denen ein zusammenfaltbares Verdeck 3 verschieblich geführt ist.

Dabei umfasst das Verdeck 3 mehrere, gelenkig miteinander verbundene, plattenförmige Teilelemente 4, von denen die jeweils benachbarten Teilelemente 4 in ihren aneinander angrenzenden Kantenbereichen mittels einer Schwenkachse 5 gelenkig miteinander verbunden sind. Dabei kann jede zweite Schwenkachse gleichzeitig auch als Lagerung des Schiebeverdecks 1 in den Lauf- und Führungsschienen 2 ausgebildet sein.

Das jeweils erste bzw. letzte Teilelement 4 des Schiebeverdecks 1 weist dabei einen abgewinkelten Bereich 6 auf, der zumindest in etwa, insbesondere wenigstens, der Höhe der Lauf- und Führungsschienen 2 entspricht und somit den freien Bereich zwischen den Lauf- und Führungsschienen 2 stirnseitig abschließt.

Wie aus Figur 4 ersichtlich, kann das Schiebeverdeck 1 auch in beide Richtungen und insbesondere beliebig verschiebbar ausgebildet sein.

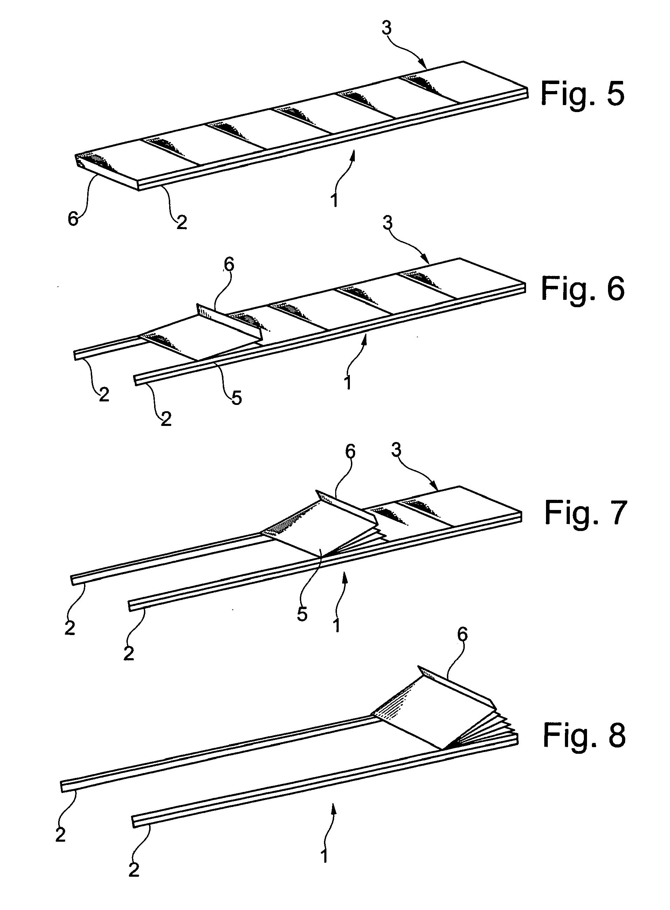

Die Figuren 5 bis 8 zeigen eine andere Ausführungsform eines erfindungsgemäßen Schiebeverdecks 1, wobei hier die Teilelemente 4 nicht gelenkig miteinander verbunden sind, sondern stattdessen in geschlossenem Zustand des Schiebeverdecks 1 nebeneinander und aneinander angrenzend vorgesehen sind.

Beim Öffnen des Schiebeverdecks 1 schieben sich die an einem Kantenbereich mittels einer Schwenkachse 5 jeweils in den Lauf- und Führungsschienen 2 geführten Teilelemente 4 dann fächerförmig übereinander (Figur 8).

## Patentansprüche

1. Schiebeverdeck (1) für LKW oder LKW-Anhänger mit oberhalb der Ladefläche des LKW oder LKW-Anhängers entlang der Längsseiten der Ladefläche verlaufenden Lauf- und Führungsschienen (2), in denen ein zusammenfaltbares Verdeck (3) verschieblich geführt ist, **dadurch gekennzeichnet, dass** das Verdeck (3), insbesondere gelenkig miteinander verbundene, plattenförmige Teilelemente (4) umfasst.

2. Schiebeverdeck (1) für LKW oder LKW-Anhänger nach dem vorhergehenden Anspruch, **dadurch gekennzeichnet, dass** die plattenförmigen Dachelemente zumindest zur Seite hin abfallend ausgebildet sind.

3. Schiebeverdeck (1) für LKW oder LKW-Anhänger nach einem der vorhergehenden Ansprüche, **dadurch gekennzeichnet, dass** die plattenförmigen Dachelemente zumindest zueinander weisend abfallend ausgebildet sind.

4. Schiebeverdeck (1) für LKW oder LKW-Anhänger nach einem der vorhergehenden Ansprüche, **dadurch gekennzeichnet, dass** der Aufbau der plattenförmigen Dachelemente einen Verbundstoff, wie z. B. wabenstrukturiertem beschichteten Papier oder schaumgefüllten Profilelementen, umfasst.

5. Schiebeverdeck (1) für LKW oder LKW-Anhänger nach einem der vorhergehenden Ansprüche, **dadurch gekennzeichnet, dass** der Aufbau der plattenförmigen Dachelemente eine mit einem Netz, einer Folie oder einer dünnen Platte bespannte oder belegte Rahmenstruktur umfasst.

6. Schiebeverdeck (1) für LKW oder LKW-Anhänger nach einem der vorhergehenden Ansprüche, **dadurch gekennzeichnet, dass** für die Betätigung des Verdecks ein manuelles Betätigungselement, wie z. B. eine Schlaufe, ein Seilzug oder eine Kurbel, vorgesehen ist.

7. Schiebeverdeck (1) für LKW oder LKW-Anhänger nach einem der vorhergehenden Ansprüche, **dadurch gekennzeichnet, dass** eine elektrische, insbesondere elektromotorische, eine pneumatische oder hydraulische, oder aber eine motorische Betätigung des Verdecks vorgesehen ist.

8. Schiebeverdeck (1) für LKW oder LKW-Anhänger nach einem der vorhergehenden Ansprüche, **dadurch gekennzeichnet, dass** das Verdeck begehbar mit ausreichender Stabilität ausgebildet ist.

9. Schiebeverdeck (1) für LKW oder LKW-Anhänger nach einem der vorhergehenden Ansprüche, **dadurch gekennzeichnet, dass** das Verdeck im geschlossenen Zustand wasserdicht ausgebildet ist.

10. Schiebeverdeck (1) für LKW oder LKW-Anhänger nach einem der vorhergehenden Ansprüche, **dadurch gekennzeichnet, dass** das Verdeck im geschlossenen Zustand thermisch isolierend ausgebildet ist.

11. Schiebeverdeck (1) für LKW oder LKW-Anhänger nach einem der vorhergehenden Ansprüche, **dadurch gekennzeichnet, dass** zumindest bei zwei plattenförmige Teilelementen (4) die Führung des Verdecks in den Lauf- und Führungsschienen (2) in dem Bereich, in dem die plattenförmige Teilelemente (4) gelenkig miteinander verbunden sind, vorgesehen ist.
